# EUROPÄISCHE PATENTANMELDUNG

(11) **EP 2 599 599 A2**
(43) Veröffentlichungstag der Anmeldung: **05.06.2013**
(21) Anmeldenummer: 12195255.0
(22) Anmeldetag: 03.12.2012
(51) Int. Cl.: B27B 25/04

(54) **Materialbearbeitungsvorrichtung**

(30) Priorität: 01.12.2011 DE 102011087573
(71) Anmelder: Raimann Holzoptimierung GmbH & Co. KG, 79108 Freiburg (DE)
(72) Erfinder: Ruh, Rüdiger, 79244 Münstertal (DE)
(74) Vertreter: Schröder, Christoph

(57) **Zusammenfassung**

Die Erfindung betrifft eine Materialbearbeitungsvorrichtung, mit
- einer Transporteinrichtung (1) zum Transportieren eines zu bearbeitenden Materialstücks, wobei
- die Transporteinrichtung (1) mindestens eine Führungsschiene (3) und eine entlang der Führungsschiene (3) bewegbare Auflage (2) aufweist, auf die das zu bearbeitende Materialstück aufzulegen ist, wobei
- die Auflage (2) über mindestens ein Kunststoffelement (4) an der Führungsschiene (3) bewegbar gelagert ist.

## Beschreibung

Die Erfindung betrifft eine Materialbearbeitungsvorrichtung gemäß dem Oberbegriff des Anspruchs 1.

Eine derartige Materialbearbeitungsvorrichtung besitzt eine Transporteinrichtung zum Transportieren eines zu bearbeitenden Materialstücks, wobei die Transporteinrichtung eine sich entlang einer Führungsschiene bewegbare Auflage aufweist, auf die das zu bearbeitende Materialstück aufzulegen ist. Beispielsweise ist die Materialbearbeitungsvorrichtung als Holzbearbeitungsvorrichtung ausgebildet, zum Beispiel in Form einer Sägevorrichtung (insbesondere einer Holzsägevorrichtung), wobei das Materialstück (das Sägegut) mit Hilfe der Transporteinrichtung durch ein Sägeblatt oder mehrere Sägeblätter der Sägevorrichtung hindurchgeführt wird. Um den Verschleiß zwischen der Auflage und der Führungsschiene der Transporteinrichtung möglichst gering zu halten, ist es erforderlich, einen Schmierstoff einzusetzen. Der Schmierstoff kann jedoch in Kontakt mit dem zu bearbeitenden Materialstück kommen, was zu unerwünschten Veränderungen des Materialstücks, zum Beispiel Verfärbungen oder eine Beschädigung der Oberfläche, führen kann.

Das der Erfindung zugrunde liegende Problem besteht darin, eine Materialbearbeitungsvorrichtung mit einer Transporteinrichtung bereitzustellen, die möglichst verschleißfrei betrieben werden kann und dennoch eine Beeinträchtigung des zu bearbeitenden Materialstücks soweit wie möglich vermieden wird.

Dieses Problem wird durch die Materialbearbeitungsvorrichtung mit den kennzeichnenden Merkmalen des Anspruchs 1 gelöst. Weiterbildungen der Erfindungen sind in den abhängigen Ansprüchen angegeben.

Danach wird eine Materialbearbeitungsvorrichtung bereitgestellt, mit
- einer Transporteinrichtung zum Transportieren eines zu bearbeitenden Materialstücks, wobei
- die Transporteinrichtung mindestens eine Führungsschiene und eine entlang der Führungsschiene bewegbare Auflage aufweist, auf die das zu bearbeitende Materialstück aufzulegen ist, und wobei
- die Auflage über mindestens ein Kunststoffelement bewegbar (insbesondere verschiebbar) an der Führungsschiene gelagert ist.

Wie oben bereits erwähnt, kann es sich bei der Materialbearbeitungsvorrichtung um eine Holzbearbeitungsvorrichtung handeln. Denkbar ist allerdings auch, dass die erfindungsgemäße Materialbearbeitungsvorrichtung zur Bearbeitung anderer Materialien ausgebildet ist, zum Beispiel von metallischen oder aus Kunststoff gebildeten Werkstücken.

Die Auflage der Transporteinrichtung ist über das Kunststoffelement an der Führungsschiene insbesondere so gelagert, dass sie zum Transport eines auf ihr angeordneten Materialstücks an der Führungsschiene entlang gleiten kann, wobei die Lagerung über das Kunststoffelement für ein möglichst reibungsarmes Gleiten der Auflage auf der Führungsschiene sorgt. Die Transporteinrichtung kann selbstverständlich mehr als eine Führungsschiene aufweisen, z.B. zwei Führungsschienen, die insbesondere zueinander parallel verlaufen. Die Führungsschiene (bzw. die mehreren Führungsschienen) erstreckt sich z.B. geradlinig, wobei es jedoch auch möglich ist, dass die Führungsschiene zumindest abschnittsweise nicht geradlinig (z.B. gekrümmt) verläuft.

Durch die Verwendung eines Kunststoffelementes zur Lagerung der Auflage der Transporteinrichtung an der Führungsschiene kann insbesondere auf die Verwendung eines Schmierstoffes verzichtet werden, so dass keine Gefahr einer Beeinträchtigung des zu bearbeitenden Materialstücks (zum Beispiel einer zu bearbeitenden Holzoberfläche) durch den Schmierstoff besteht. Darüber hinaus entstehen keine Kosten für den Schmierstoff. Des Weiteren wird eine Verschmutzung (insbesondere durch Anhaftungen eines Gemischs aus Materialpartikeln, z.B. Sägestaub, und einem Schmierstoff, z.B. in Form eines Öls) der Auflage vermieden, so dass der Reinigungs- und Wartungsaufwand der Transporteinrichtung reduziert wird.

Beispielsweise ist die Auflage aus einem anderen Material als das Kunststoffelement ausgebildet, zum Beispiel aus einem Metall oder aus einem anderen Kunststoff. Das Kunststoffelement kann jedoch auch aus demselben Material (insbesondere einem Kunststoff) wie die Auflage gebildet sein, wobei auch denkbar ist, dass das Kunststoffelement und die Auflage einstückig miteinander verbunden sind. Möglich ist auch, dass die Auflage und/oder das Kunststoffelement ein mit einer Beschichtung versehenes Trägermaterial aufweisen, wobei z.B. die Beschichtung des Kunststoffelementes und die Beschichtung der Auflage durchaus aus demselben Material bestehen können.

Gemäß einer Ausgestaltung der Erfindung weist die Auflage der Transporteinrichtung eine Mehrzahl bewegbar miteinander verbundener Auflageelemente auf. Beispielsweise sind die Auflageelemente in Form von Kettengliedern ausgebildet, so dass die Auflage in Form einer (insbesondere umlaufenden) Kette ausgebildet ist. Beispielsweise sind die Auflageelemente jeweils einstückig ausgebildet, z.B. aus einem Metall, etwa in Form eines Gussteils (insbesondere in Form eines Stahlgussteils). Möglich ist auch, dass die Auflageelemente aus einem Kunststoff ausgeformt sind.

Gemäß einer Weiterbildung dieser Erfindungsvariante weist jedes der Auflageelemente ein Kunststoffelement auf, über das es an der Führungsschiene gelagert ist. Denkbar ist natürlich auch, dass jedes der Auflageelemente mehrere (zum Beispiel zwei) Kunststoffelemente aufweist. Beispielsweise umfasst die Transporteinrichtung zwei Führungsschienen zur Führung der Auflage, so dass entsprechend mindestens zwei Kunststoffelemente pro Auflageelement vorhanden sind, von denen eines der einen und das andere der anderen Führungsschiene zugeordnet ist.

Darüber hinaus kann das Kunststoffelement eine Vertiefung aufweisen, mit der es auf der Führungsschiene aufliegt. Insbesondere ist die Vertiefung korrespondierend zu der Form der der Auflage zugewandten Oberfläche (Gleitoberfläche) der Führungsschiene ausgebildet, d.h. die Form der Vertiefung ist an die Form der Gleitoberfläche der Führungsschiene angepasst. Denkbar ist, dass die Führungsschiene eine Gleitoberfläche besitzt, die im Querschnitt (entlang einer senkrecht zur Führungsschiene orientierten Ebene) nach oben spitz zuläuft, d.h. einen zumindest näherungsweise dreieckigen Querschnitt aufweist. Entsprechend weist das Kunststoffelement eine im Querschnitt dreieckige Vertiefung auf, d.h. die Vertiefung wird durch zwei zueinander schräg orientierte und aufeinander zu laufende Oberflächen begrenzt.

Das Kunststoffelement kann zudem in seiner der Führungsschiene zugewandten Oberfläche mindestens eine senkrecht oder schräg zur Führungsschiene verlaufende Nut zum Abführen von Materialpartikeln (z.B. i, die bei der Bearbeitung des Materialstücks entstehen, aufweisen. Die mindestens eine Nut kann auch dazu dienen, einem Aufschwingen der Kettenglieder durch den Stick-Slip-Effekt (Haftgleiteffekt) und somit insbesondere starken Geräuschentwicklungen entgegenzuwirken.

Möglich ist auch, dass die erfindungsgemäße Materialbearbeitungsvorrichtung eine Verschleißerkennungseinrichtung umfasst, die zum Erkennen eines Verschleißes des Kunststoffelementes dient. Insbesondere soll mit der Verschleißerkennungseinrichtung ein Materialabtrag von der auf der Führungsschiene aufliegenden Oberfläche des Kunststoffelementes überwacht werden.

Beispielsweise umfasst die Verschleißerkennungseinrichtung einen in die Führungsschiene integrierten Metallerkennungssensor, wobei das Kunststoffelement ein mit diesem Metallerkennungssensor erkennbares Metallelement (z.B. in Form eines Stahleinlegers) aufweist. Das Metallelement ist so in Bezug zu der der Führungsschiene zugewandten Oberfläche des Kunststoffelementes und in Bezug zu dem Metallerkennungssensor angeordnet (zum Beispiel in das Kunststoffelement integriert), dass ein Abtrag von der Oberfläche des Kunststoffelementes in einer Verkürzung des Abstandes zwischen dem Metallerkennungssensor und dem Metallelement resultiert. Die Verkürzung dieses Abstandes wird von dem Metallerkennungssensor registriert, wobei zum Beispiel ein Signal (ein Alarmsignal) erzeugt wird, wenn der Abstand unter ein vorgebbares Minimum fällt.

Beispielsweise ist der Metallerkennungssensor in Form eines induktiven Sensors (z.B. ein induktiver Näherungssensor) ausgebildet. Insbesondere ist der Metallerkennungssensor, zum Beispiel der erwähnte induktive Sensor, in einer Aussparung in der Führungsschiene angeordnet. Des Weiteren kann das Kunststoffelement ein Spritzgussteil sein, wobei das Metallelement in dieses Spritzgussteil eingespritzt ist.

In einer anderen Ausführung der Erfindung umfasst die Materialbearbeitungsvorrichtung einen Kraftsensor zum Bestimmen einer auf die Auflage der Transporteinrichtung ausgeübten Kraft, wobei der Kraftsensor auch zum Bestimmen eines Druckes auf die Auflage ausgebildet sein kann. Der Kraftsensor ist z.B. in das Kunststoffelement integriert oder zwischen dem Kunststoffelement und der Auflage angeordnet.

Als Kraftsensor können im Prinzip beliebige konventionelle Kraftsensoren verwendet werden, zum Beispiel auf Dehnmessstreifen basierende Sensoren.

Das Kunststoffelement ist beispielsweise aus Polyphenylensulfid oder Polyoxymethylen gebildet. Denkbar ist auch, dass diese Kunststoffe, um möglichst geringe Reibungswerte für die Reibung zwischen der Oberfläche des Kunststoffelementes und der Oberfläche der Führungsschiene zu erhalten, reibungsvermindernde Zusätze (zum Beispiel Graphit) enthalten.

Die Erfindung wird im Folgenden anhand von Ausführungsbeispielen unter Bezugnahme auf die Figuren im Einzelnen erläutert. Es zeigen:
- Fig. 1: eine Schnittansicht einer Transporteinrichtung einer Materialbearbeitungsvorrichtung gemäß einem Ausführungsbeispiel der Erfindung;
- Fig. 2: ein Auflageelement der Transporteinrichtung aus Fig. 1;
- Fig. 3A: eine perspektivische Ansicht einer Unterseite eines Kunststoffelementes einer Auflage der Transporteinrichtung aus den Fig. 1 und 2;
- Fig. 3B: eine perspektivische Ansicht einer Oberseite des Kunststoffelementes aus Fig. 3A;
- Fig. 4: eine perspektivische Ansicht der Transporteinrichtung aus Fig. 1; und
- Fig. 5: eine weitere perspektivische Ansicht eines Teiles der Transporteinrichtung.

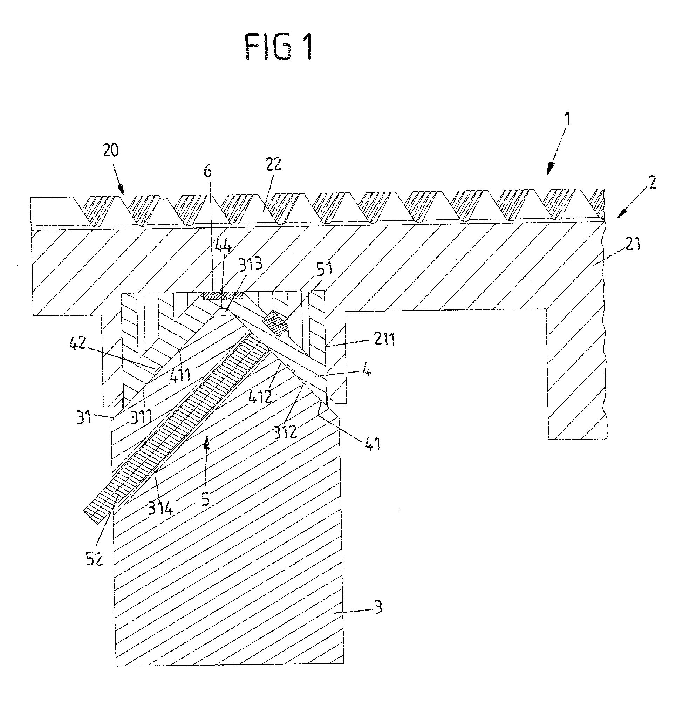

Die in Fig. 1 im Schnitt gezeigte Transporteinrichtung 1 der erfindungsgemäßen Materialbearbeitungsvorrichtung (z.B. eine Sägevorrichtung oder eine sonstige Vorrichtung zur Holzbearbeitung) umfasst eine Auflage 2, auf die ein Materialstück (z.B. ein Sägegut) aufgelegt werden soll. Die Auflage 2 umfasst eine Mehrzahl bewegbar miteinander verbundener Auflageelemente in Form von Kettengliedern 21.

Die Transporteinrichtung 1 umfasst darüber hinaus zwei parallel zueinander verlaufende Führungsschienen, wobei in Fig. 1 nur eine der beiden Führungsschienen dargestellt ist. Die Kettenglieder 21 der Auflage 2 sind jeweils an der Führungsschiene 3 (und an der nicht dargestellten zweiten Führungsschiene) so gelagert, dass sie entlang der Führungsschiene 3 gleitend bewegbar sind, so dass die Kettenglieder 21 zum Transportieren eines auf ihr angeordneten Materialstücks (nicht dargestellt) gemeinsam bewegt werden können.

Das zu bearbeitende Materialstück wird auf eine Auflagefläche 20 der Auflage 2, die durch die der Führungsschiene 3 abgewandten Oberseiten der Kettenglieder 21 gebildet wird, aufgelegt. Die Oberseiten der Kettenglieder 21 weisen reibungserhöhende Strukturen in Form einer Mehrzahl von Vorsprüngen 22 auf, die ein Abrutschen des Materialstücks von der Auflagefläche 20 verhindern sollen.

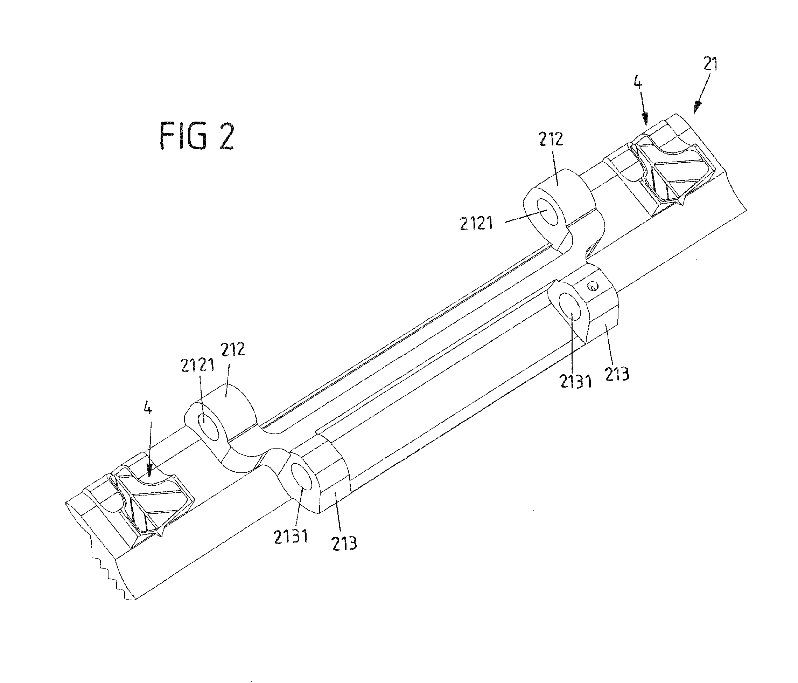

Um eine möglichst geringe Reibung zwischen den Kettengliedern 21 und der Führungsschiene 3 zu ermöglichen, sind die Kettenglieder 21 jeweils über ein Kunststoffelement in Form eines Kunststoffgleitschuhs 4 an der Führungsschiene 3 gelagert. Entsprechend weisen die Kettenglieder 21 jeweils einen weiteren Kunststoffgleitschuh auf, über den sie auch an der zweiten Führungsschiene gelagert sind (vgl. Fig. 2).

Die Kunststoffgleitschuhe 4 sind jeweils in einer Aussparung 211 der Kettenglieder 21 angeordnet, wobei in der der Führungsschiene 3 zugewandten Seite der Kunststoffgleitschuhe 4 jeweils eine von einer Gleitoberfläche 41 begrenzte Vertiefung vorgesehen ist. Über diese Vertiefung, d.h. über die Gleitoberfläche 41 liegen die Kunststoffgleitschuhe 4 an einer Gleitoberfläche 31 der Führungsschiene 3 an, wobei die Form der Gleitoberfläche 41 der Kunststoffgleitschuhe 4 entsprechend an die Form der Gleitoberfläche 31 der Führungsschiene 3 angepasst ist. Im Beispiel der Fig. 1, d. h. im Querschnitt entlang einer Ebene, die senkrecht zur Führungsschiene 3 orientiert ist, betrachtet, bilden zwei schräg zueinander orientierte Abschnitte 311, 312 der Gleitoberfläche 31 der Führungsschiene 3 näherungsweise ein V. Entsprechend weisen auch die Gleitoberflächen 41 der Kunststoffgleitschuhe 4 zwei schräg zueinander orientierte und aufeinander zu laufende Abschnitte 411, 412 auf. Die Gleitoberfläche 31 muss natürlich nicht zwingend V-förmig gestaltet sein, sondern sie kann auch eine andere Form aufweisen, z.B. eben oder U-förmig.

Die jeweils den Kunststoffgleitschuhen 4 zugewandte Spitze der Gleitoberfläche 31 der Führungsschiene 3 ist abgeflacht, so dass jeweils ein Zwischenraum 313 zwischen der Gleitoberfläche 31 und den Kunststoffgleitschuhen 4 ausgebildet ist. Die Kunststoffgleitschuhe 4 weisen ebenfalls eine Abflachung 44 auf, die gewissermaßen einen sich entlang der Führungsschiene 3 erstreckenden Boden ihrer der Führungsschiene 3 zugewandten Vertiefung bildet und die den Zwischenraum 313 begrenzt.

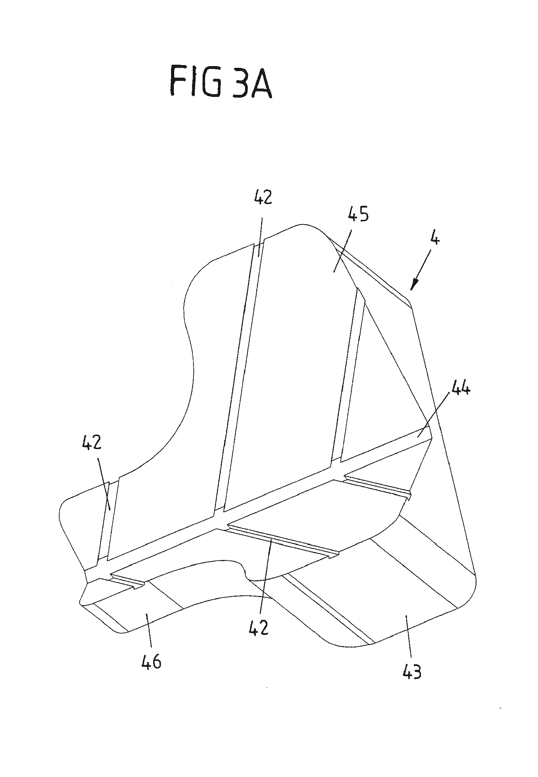

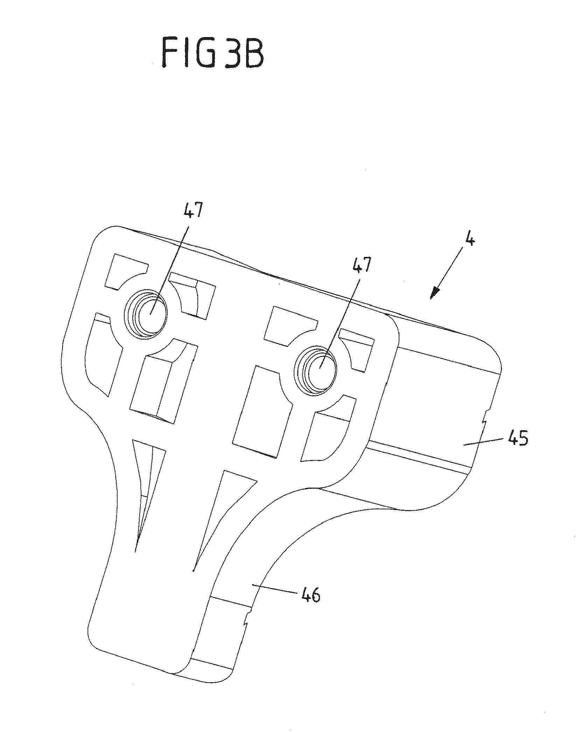

Die Zwischenräume 313 zwischen der Führungsschiene 3 und den Kunststoffgleitschuhen 4 dienen insbesondere zum Abführen von Materialpartikeln (Materialabfällen), die bei der Materialbearbeitung mit der erfindungsgemäßen Materialbearbeitungsvorrichtung entstehen. Zum Abführen derartiger Materialpartikel sind darüber hinaus jeweils schräg zur Führungsschiene 3 (d.h. schräg zur Haupterstreckungsrichtung der Führungsschiene) verlaufende Abweisernuten 42 in dem Kunststoffgleitschuhen 4 vorgesehen (vgl. insbesondere auch die Figuren 3A, 3B). Die Abweisernuten 42 können, wie oben bereits erwähnt, auch so ausgebildet sein, dass sie einem Aufschwingen der Kettenglieder 21 durch den Stick-Slip-Effekt und damit starken Geräuschentwicklungen entgegenwirken.

Des Weiteren umfasst die erfindungsgemäße Materialbearbeitungsvorrichtung eine Verschleißerkennungseinrichtung 5, die jeweils in die Kunststoffgleitschuhe 4 integrierte Metallelemente 51 und in länglichen Aussparungen 314 der Führungsschiene 3 angeordnete induktive Metallerkennungssensoren 52 zum Detektieren der Metallelemente 51 umfasst, wobei jeweils einem Metallelement 51 ein Metallerkennungssensoren 52 zugeordnet ist. Denkbar ist, dass sämtliche Kunststoffgleitschuhe 4 mit Metallelementen 51 und die Führungsschiene 3 mit einer entsprechenden Anzahl von Metallerkennungssensoren 52 ausgestattet ist. Dies ist natürlich nicht zwingend; möglich ist vielmehr auch, dass nur einige der Kunststoffgleitschuhe 4 ein Metallelement 51 aufweisen und die Führungsschiene 3 eine entsprechend geringere Anzahl von Metallerkennungssensoren 52 besitzt.

Die Metallelemente 51 sind insbesondere so in den Kunststoffgleitschuhen 4 angeordnet, dass sie mit den Aussparungen 314, in der sich die Metallerkennungssensoren 52 befinden, fluchten, d. h. zumindest näherungsweise in einer Linie mit den Aussparungen 314 liegen. Über die Metallerkennungssensoren 52, die z. B. jeweils eine in den Aussparungen 314 angeordnete Messspule umfassen, kann insbesondere ein Abstand zwischen den Metallerkennungssensoren 52 und den Metallelementen 51 bestimmt werden, so dass jeweils die Dicke des Materials der Kunststoffgleitschuhe 4 zwischen den Gleitoberflächen 41 und den Metallelementen 51 überwacht werden kann. Diese Dicke wird sich mit zunehmender Benutzung der Transporteinrichtung 1 durch Abtrag von Material der Gleitoberflächen 41 reduzieren, so dass auch der Abstand zwischen den Metallerkennungssensoren 52 und den jeweils zugeordneten Metallelementen 51 kleiner wird. Sinkt dieser Abstand unter einen vorgebbaren Mindestwert, erzeugt die Metallerkennungseinrichtung 5 z. B. ein Signal, das von einer Auswerteeinrichtung (nicht dargestellt) aufgenommen und z. B. in ein Alarmsignal umgesetzt wird.

Die Materialbearbeitungsvorrichtung umfasst des Weiteren in die Kunststoffgleitschuhe 4 integrierte Drucksensoren (oder Kraftsensoren) 6, die insbesondere eine auf die Auflage 2 wirkende Kraft (bzw. einen Druck auf die Auflage 2) erfassen. Die Drucksensoren 6 ermöglichen insbesondere ein Einstellen eines Druckwerks der Materialbearbeitungsvorrichtung auf unterschiedliche Höhen (senkrecht zur Auflage 2) des Werkstücks, z. B. auf die Höhe eines Werkstücks in Form eines Holzstücks (insbesondere bei verzogenem oder geschüsseltem Holz). Es ist denkbar, aber nicht zwingend, dass in jeden der Kunststoffgleitschuhe 4 ein Drucksensor integriert ist.

Die Fig. 2 zeigt eine perspektivische Ansicht eines der Kettenglieder 21 der erfindungsgemäßen Materialbearbeitungsvorrichtung. Es ist zu erkennen, dass die Kettenglieder 21 jeweils zwei Kunststoffgleitschuhe 4 aufweisen, über die sie jeweils an einer Führungsschiene gelagert sind. Die Kettenglieder 21 werden über Befestigungsstrukturen, die insbesondere in Vorsprüngen 212, 213 angeordnete Öffnungen 2121, 2131 aufweisen, miteinander verbunden, wobei jeweils die Vorsprünge 213 eines ersten Kettengliedes in einen Zwischenraum zwischen den Vorsprüngen 212 eines zweiten, mit dem ersten Kettenglied zu verbindenden Kettengliedes eingesetzt und die beiden Kettenglieder dann über durch die Befestigungsöffnungen 2121, 2131 hindurchgeschobene Stifte (Bolzen) miteinander verbunden werden.

Die Figuren 3A, 3D zeigen einen der Kunststoffgleitschuhe 4 in perspektivischer Ansicht, wobei Fig. 3A eine der Führungsschiene 3 zuzuwendende Unterseite des Kunststoffelementes 4 zeigt und Fig. 3B eine der Auflagefläche 20 des jeweiligen Kettengliedes 21 zuzuwendende Oberseite. Zu erkennen sind in Fig. 3A die im montierten Zustand des Kunststoffgleitschuhs 4 schräg zur Führungsschiene verlaufenden Abweisernuten 42. Die Abweisernuten 42 erstrecken sich von einem äußeren Rand 43 des Kunststoffgleitschuhs 4 zu der mittig und nach Montage der Transporteinrichtung entlang der Führungsschiene 3 verlaufenden Abflachung 44, wobei die Abflachung 44 den zwischen dem Kunststoffgleitschuh 4 und der Führungsschiene gebildeten Zwischenraum begrenzt (vgl. Fig. 1). Über die Abweisernuten 42 können Materialpartikel, die bei der Bearbeitung eines Materialstücks zwischen die Kunststoffgleitschuhe 4 und die Führungsschiene 3 geraten, nach außen abtransportiert werden.

Der Kunststoffgleitschuh 4 weist darüber hinaus einen ersten Bereich 45 auf, der senkrecht zur Führungsschiene (d. h. senkrecht zur Haupterstreckungsrichtung der Abflachung 44) eine größere Breite aufweist als ein zweiter Bereich 46. In dem breiteren ersten Bereich 45 sind Verbindungsstrukturen in Form zweier Verbindungsöffnungen 47 vorgesehen, über die das Kunststoffelement 4 mit dem Kettenglied 21 verbindbar ist. Denkbar ist allerdings auch, dass das Kunststoffelement 4 in die Aussparung 211 des Kettengliedes eingeklebt oder per Presspassung eingepasst wird.

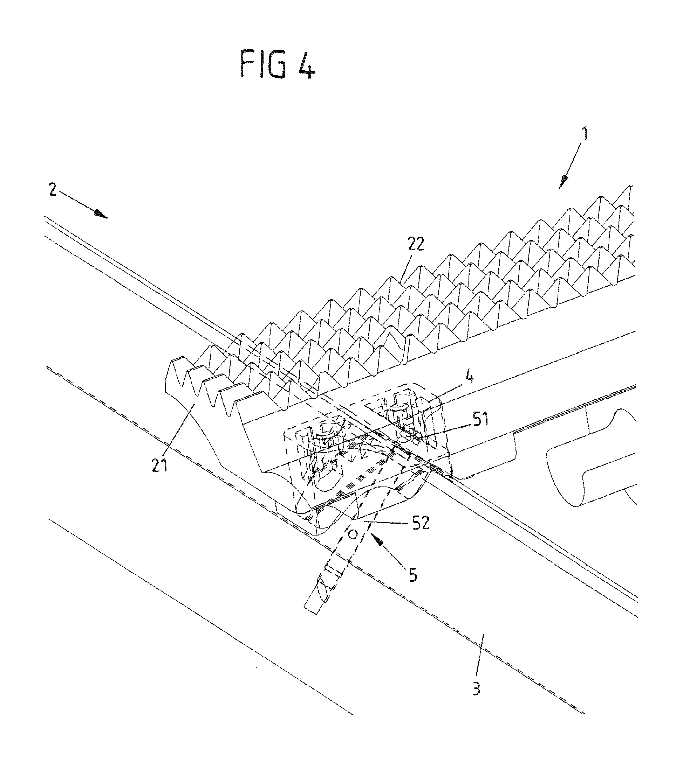

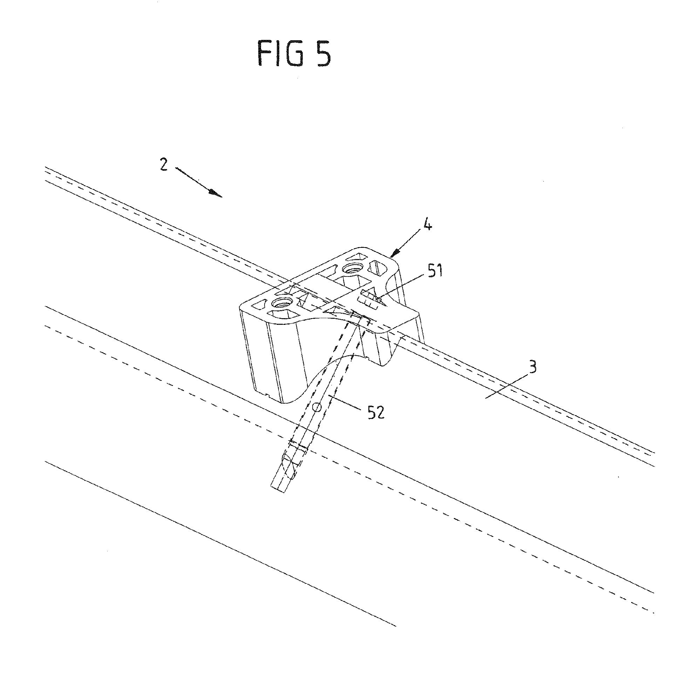

Fig. 4 zeigt eine perspektivische Darstellung eines Teiles der erfindungsgemäßen Materialbearbeitungsvorrichtung, wobei lediglich ein einziges Kettenglied 21 und nur eine der beiden Führungsschienen dargestellt ist. Der Kunststoffgleitschuh 4 befindet sich, wie bereits anhand der Fig. 1 erläutert, in einer Aussparung 211 des Kettengliedes 21 und wäre entsprechend in der Darstellung der Fig. 4 nicht sichtbar, weshalb der Kunststoffgleitschuh 4 gestrichelt dargestellt ist. Fig. 5 zeigt eine ähnliche Ansicht wie die Fig. 4. Allerdings wurde in dieser Darstellung das Kettenglied 21 weggelassen, um den Kunststoffgleitschuh 4 zu zeigen.

### Bezugszeichenliste

- 1: Transporteinrichtung
- 2: Auflage
- 3: Führungsschiene
- 4: Kunststoffelement
- 5: Verschleißerkennungseinrichtung
- 6: Drucksensor
- 20: Auflagefläche
- 21: Kettenglied
- 22: Vorsprung
- 31: Gleitoberfläche Führungsschiene
- 41: Gleitoberfläche Kunststoffelement
- 42: Abweisernut
- 43: Rand
- 44: Abflachung
- 45: erster Bereich
- 46: zweiter Bereich
- 47: Verbindungsöffnung
- 51: Metallelement
- 52: Metallerkennungssensor
- 211: Aussparung
- 212, 213: Vorsprung
- 311, 312: Abschnitt
- 313: Zwischenraum
- 314: Aussparung in Führungsschiene
- 411,412: Abschnitt
- 2121, 2131: Befestigungsöffnung

## Patentansprüche

1. Materialbearbeitungsvorrichtung, mit
- einer Transporteinrichtung (1) zum Transportieren eines zu bearbeitenden Materialstücks, wobei
- die Transporteinrichtung (1) mindestens eine Führungsschiene (3) und eine entlang der Führungsschiene (3) bewegbare Auflage (2) aufweist, auf die das zu bearbeitende Materialstück aufzulegen ist,
**dadurch gekennzeichnet, dass**
die Auflage (2) über mindestens ein Kunststoffelement (4) an der Führungsschiene (3) bewegbar gelagert ist.

2. Materialbearbeitungsvorrichtung nach Anspruch 1, **dadurch gekennzeichnet, dass** die Auflage (2) aus einem anderen Material als das Kunststoffelement (4) ausgebildet ist.

3. Materialbearbeitungsvorrichtung nach Anspruch 1 oder 2, **dadurch gekennzeichnet, dass** die Auflage (2) eine Mehrzahl bewegbar miteinander verbundener Auflageelemente (21) aufweist.

4. Materialbearbeitungsvorrichtung nach Anspruch 3, **dadurch gekennzeichnet, dass** die Auflageelemente (21) einstückig aus einem Metall gebildet sind.

5. Materialbearbeitungsvorrichtung nach Anspruch 3 oder 4, **dadurch gekennzeichnet, dass** jedes der Auflageelemente (21) mindestens ein Kunststoffelement (4) aufweist, über das es an der Führungsschiene (3) gelagert ist.

6. Materialbearbeitungsvorrichtung nach einem der vorhergehenden Ansprüche, **dadurch gekennzeichnet, dass** das Kunststoffelement (4) eine Vertiefung aufweist, mit der es auf der Führungsschiene (3) aufliegt.

7. Materialbearbeitungsvorrichtung nach Anspruch 6, **dadurch gekennzeichnet, dass** die die Vertiefung begrenzenden Oberflächenabschnitte (411, 412) des Kunststoffelementes (4) - in einer sich senkrecht zur Führungsschiene (3) erstreckenden Ebene betrachtet - einen V- oder U-förmigen Querschnitt bilden.

8. Materialbearbeitungsvorrichtung nach einem der vorhergehenden Ansprüche, **dadurch gekennzeichnet, dass** das Kunststoffelement (4) in seiner der Führungsschiene (3) zugewandten Oberfläche (41) mindestens eine senkrecht oder schräg zur Führungsschiene (3) verlaufende Nut (42) zum Abführen von Materialpartikeln aufweist.

9. Materialbearbeitungsvorrichtung nach einem der vorhergehenden Ansprüche, **gekennzeichnet durch** eine Verschleißerkennungseinrichtung (5) zum Erkennen eines Verschleißes des Kunststoffelementes (4), wobei die Verschleißerkennungseinrichtung (5) einen in die Führungsschiene (3) integrierten Metallerkennungssensor (52) umfasst und das Kunststoffelement (4) mindestens ein mit dem Metallerkennungssensor (52) erkennbares Metallelement (51) aufweist.

10. Materialbearbeitungsvorrichtung nach Anspruch 9, **dadurch gekennzeichnet, dass** der Metallerkennungssensor (52) in einer Aussparung (314) der Führungsschiene (3) angeordnet ist.

11. Materialbearbeitungsvorrichtung nach Anspruch 10, **dadurch gekennzeichnet, dass** der Metallerkennungssensor (52) in Form eines induktiven Sensors ausgebildet ist.

12. Materialbearbeitungsvorrichtung nach einem der Ansprüche 9 bis 11, **dadurch gekennzeichnet, dass** das Kunststoffelement (4) ein Spritzgussteil ist, in das das Metallelement (51) eingespritzt ist.

13. Materialbearbeitungsvorrichtung nach einem der vorhergehenden Ansprüche, **gekennzeichnet durch** einen Kraftsensor (6) zum Bestimmen einer auf die Auflage ausgeübten Kraft, wobei der Kraftsensor (6) in das Kunststoffelement (4) integriert oder zwischen dem Kunststoffelement (4) und der Auflage (2) angeordnet ist.

14. Materialbearbeitungsvorrichtung nach einem der vorhergehenden Ansprüche, **dadurch gekennzeichnet, dass** das Kunststoffelement (4) aus Polyphenylensulfid oder Polyoxymethylen gebildet ist.
